(19) Europäisches Patentamt
European Patent Office
Office européen des brevets

(11) **EP 3 997 985 A1**

(12) **EUROPEAN PATENT APPLICATION**
published in accordance with Art. 153(4) EPC

(43) Date of publication:
**18.05.2022 Bulletin 2022/20**

(21) Application number: **20837499.1**

(22) Date of filing: **07.07.2020**

(51) International Patent Classification (IPC):
***A23L 7/10*** *(2016.01)*

(52) Cooperative Patent Classification (CPC):
**A23L 7/10**

(86) International application number:
**PCT/JP2020/026571**

(87) International publication number:
**WO 2021/006273 (14.01.2021 Gazette 2021/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.07.2019 JP 2019126945**

(71) Applicant: **Yanmar Power Technology Co., Ltd.
Osaka-shi
Osaka 530-0013 (JP)**

(72) Inventors:
• **TSUCHIYA, Kuniyasu
  Osaka-shi, Osaka 530-0013 (JP)**
• **NODA, Shuhei
  Osaka-shi, Osaka 530-0013 (JP)**

(74) Representative: **Vigand, Philippe et al
Novagraaf International SA
Chemin de l'Echo 3
1213 Onex - Genève (CH)**

(54) **DRIED RICE GEL PRODUCTION METHOD AND DRIED RICE GEL**

(57) This dried rice gel production method comprises step (S 1) and step (S2). In step (S1), the Young's modulus of a raw material rice gel is increased to harden the raw material rice gel, thereby obtaining a hardened rice gel. In step (S2), the hardened rice gel is dried to obtain a dried rice gel. In step (S1) for obtaining the hardened rice gel, the hardened rice gel is preferably obtained by hardening the raw material rice gel such that the Young's modulus of the raw material rice gel exceeds a predetermined value (TH). The predetermined value (TH) is preferably a value of 160 kilopascals or more and more preferably 440 kilopascals or more.

FIG. 1

EP 3 997 985 A1

**Description**

TECHNICAL FIELD

The present invention relates to a production method of dried rice gel and dried rice gel.

BACKGROUND ART

In recent years, there has been need for increasing demand for and expanding application of rice, and finding a potential of rice. Patent Literature 1 describes a gel-form material (rice gel) obtained by adding more than 1.5 times as much water to high-amylose rice and performing heating, and subjecting the gelatinized rice thus obtained to mechanical stirring. The rice gel in Patent Literature 1 exhibits good hardness and texture by itself, and still maintains the good hardness and texture after storage, and thus can be used as a raw material of processed food that appeals for applications such as food for elderly people, a nursing meal, low-GI food, and diet food.

However, such rice gel contains a large amount of water, and thus is likely to propagate bacteria and the like and not suitable for long-term storage. Then, it has been demanded to reduce water amount of rice gel by drying.

In addition, advantage of reducing water content of rice gel includes reduction in transport cost by weight saving.

However, since rice gel contains a large amount of water as described above, it has been a problem to require a great deal of energy for drying rice gel.

CITATION LIST

Patent Literature

Patent Literature 1: Japanese Patent Laid-open Publication No. 2013-70663

DISCLOSURE OF INVENTION

PROBLEMS TO BE SOLVED BY THE INVENTION

Accordingly, an object of the present invention is to provide a production method of dried rice gel that facilitates removal of water and enables efficient drying of rice gel, and dried rice gel.

MEANS FOR SOLVING THE PROBLEMS

According to an aspect of the present invention, the production method of dried rice gel includes a process of increasing Young's modulus of raw material rice gel to harden the raw material rice gel and obtaining hardened rice gel, and a process of drying the hardened rice gel and obtaining dried rice gel.

According to another aspect of the present invention, the dried rice gel is obtained by increasing Young's modulus of raw material rice gel, thereby obtaining hardened rice gel which is the raw material rice gel being hardened, and drying the hardened rice gel.

EFFECT OF THE INVENTION

According to an embodiment of the present invention, removal of water is facilitated, thus enabling efficient drying of rice gel.

BRIEF DESCRIPTION OF DRAWINGS

FIG. 1 is a flow chart showing an example of a production method of dried rice gel according to an embodiment of the present invention.
FIG. 2 is a flow chart showing another example of a production method of dried rice gel according to an embodiment of the present invention.
FIG. 3 is a graph showing results of drying tests in Example 1 and Comparative Example 1 of the present invention.
FIG. 4 is a graph showing results of drying tests in Example 1 to Example 4 of the present invention.
FIG. 5 is a graph showing relation between a hardening period and Young's modulus of raw material rice gel according to Example 5 of the present invention.
FIG. 6 is a graph showing results of drying tests in Example 6 to Example 12 of the present invention.

DESCRIPTION OF EMBODIMENTS

Production Method of Dried Rice Gel

Raw Material Rice Gel

The present invention relates to a production method of dried rice gel. Herein, rice gel used as a raw material for dried rice gel may be referred to as raw material rice gel for discriminating from dried rice gel.

Raw material rice gel according to an embodiment of the present invention is a gel-form material derived by, e.g., heating high-amylose rice with water in an amount of one or more the amount of the high-amylose rice, and mechanically stirring a gelatinized material obtained by $\alpha$-conversion of starch contained in the high-amylose rice. $\alpha$ conversion means that a water molecule penetrates between starch molecular chains, thereby cutting off a hydrogen bond between the molecular chains and destroying a crystalline structure. For example, raw material rice gel is preferably rice gel obtained by subjecting gelatinized rice to mechanical stirring, the gelatinized rice being derived by adding water in an amount of more than 1.5 times the amount of high-amylose rice to the high-amylose rice and performing heating. Additionally, for example, raw material rice gel is formed of high-amylose rice having an amylose content of 20% or more by mass.

The varieties of high-amylose rice may be either Japonica or Indica, and include, for example, Momi-roman, Yume-toiro, Hoshi-yutaka, Hoshi-nishiki, Mire-nishiki, Chugoku 134, Koshino-kaori, Mizuho-chikara. Among the varieties described above, Momi-roman or Yume-toiro is preferably used. High-amylose rice may be polished to any degree, and be in any form of brown rice, semi-polished rice, or white rice. A mixture of two or more different types of high-amylose rice can also be used.

Raw material rice gel used in the embodiment is obtained by subjecting gelatinized rice to mechanical stirring.

Starch contained in dried rice is in a crystal state, and referred to as $\beta$-converted starch. In a broad sense, $\beta$ conversion means hardening of starch. $\beta$ conversion may also be referred to as aging. In a narrow sense, $\beta$ conversion means separating starch molecular chains from a water molecule, generating a hydrogen bond between the molecular chains, and partially leading to recrystallization. In short, a hydrogen bond is formed between starch molecular chains of $\beta$-converted starch. Once water is added to dried rice and then heated, a water molecule penetrates into a space in a crystalline structure of $\beta$-converted starch of dried rice, thereby cutting off a hydrogen bond between starch molecular chains and extending the starch molecular chains in water. This phenomenon is referred to as $\alpha$ conversion (gelatinization).

Rice in which starch contained therein is $\alpha$ converted is herein referred to as gelatinized rice. Furthermore, addition of water to dried rice and heating for obtaining gelatinized rice is herein referred to as rice cooking.

The amount of water used in rice cooking depends on amylose content in rice, but is typically 1 or more times the amount of dried rice, particularly preferably 1 or more times the amount to 6 or less times the amount, and more preferably 2 or more times the amount to 4 or less times the amount. The amount of water within the range described above allows the degree of viscosity of rice gel to be maintained in a proper range.

Prior to rice cooking, dried rice may be immersed into water. The immersion time is not particularly limited and typically about 10 minutes or more to 120 minutes or less; but in winter season, during which water absorbency or moisture content rate of rice is relatively low, it may also be desirable to immerse for a time beyond the range described above.

For rice cooking, known heating means can be used such as a rice cooker, a pan, a pressure pan, an electromagnetic cooker (such as an IH cooker), a microwave, or a steam oven.

The conditions of heating such as temperature, pressure, and time also vary depending on means of heating, quantity of water, and the like, and is difficult to identify unambiguously, but is adjusted appropriately to time in which $\alpha$ conversion sufficiently proceeds without burning and sticking rice. For example, the conditions may be adjusted in accordance with the mode of condition integrated into a heating means (e.g., a rice gruel mode). In the heating temperature, the lower limit of temperature is typically 25°C or more, preferably 60°C or more, and particularly preferably 80°C or more. The upper limit is 130°C or less, preferably 120°C or less, and more preferably 100°C or less. Heating may be performed along with not only heating but also pressurization, and the temperature condition in this case may also be preferably a condition out of the range described above.

The water used for rice cooking should just be a liquid form, and water, ingredient other than water (e.g., cow milk, plant-based milk such as soymilk (plain soymilk, processed soymilk), coconut milk, or almond milk, or plant protein), and a mixture thereof can be appropriately selected and used.

The degree of $\alpha$ conversion of gelatinized rice is preferably greater than 95%. This is because phase transition to a gel state is unlikely to occur when the degree of α conversion of gelatinized rice is below the range described above.

Subjecting gelatinized rice to mechanical stirring provides raw material rice gel used in the embodiment.

Mechanical stirring means stirring that can destroy a tissue by physical motion, and differs from just mixing. Mechanical stirring should just be performed using e.g., a stirring machine such as a food processor, a homogenizer, a mixer, a kneader, a kneading machine, or an extruder. It is preferable that the stirring machine have a large torque, because stirring would not be prevented even in increasing viscosity of gelatinized rice during mechanical stirring. Examples of the stirring machines having a large torque include a cutter mixer (e.g., Robot Coupe, BLIXER-5Plus, FMI Corporation).

The conditions of mechanical stirring can be determined appropriately depending on the state of gelatinized rice, the type of a stirring device, and the like. For example, rotation speed at no load is preferably 1,000 rpm or more to 3,000 rpm or less, more preferably 1,200 rpm or more to 2,000 rpm or less, and even more preferably 1,500 rpm or more to 1,800 rpm or less. Moreover, optimum conditions can be selected appropriately such as decreasing rotation speed and correspondingly taking a long time, or pressure forming along with stirring with a low-speed screw at about 60 rpm.

Hardness of raw material rice gel can be comprehensively evaluated by complex elastic modulus G*. Complex elastic modulus G* is a sum of an elasticity component and a viscosity component and means general hardness, as described in Japanese Patent No. 5840904 B2. Complex elastic modulus G* is specifically shown with the length of a vector as set with storage elastic modulus G' as X-axis and loss elastic modulus G" as Y-axis. Storage elastic modulus G' is information on elasticity. Loss elastic modulus G" is information on viscosity.

The complex elastic modulus G* of raw material rice gel is preferably 1000 Pa or more, and particularly preferably 1500 Pa or more. If the complex elastic modulus G* is too low, the hardness of the rice gel is insufficient, thus potentially failing to provide food with a desired mouthfeel. In contrast, if the complex elastic modulus G* is too high, the rice gel is excessively hard, thus possibly leading to inconvenience such as preventing uniform mixing of the rice gel and other materials, or placing much burden on a stirring apparatus even in achieving uniform mixing.

Texture of raw material rice gel can be comprehensively evaluated with tan δ. A viscosity/elasticity ratio, tan δ, is specifically calculated from the formula tan δ = G"/G'. δ means an angle between a vector of complex elastic modulus G* and storage elastic modulus G' (X-axis).

Lower tan δ indicates higher characteristics as an elastic body. This means that the characteristics as an elastic body, in which deformation is generated depending on applied force but is restored to the original form upon removal of the applied force, is made higher. In contrast, higher tan δ indicates higher characteristics as a viscous body. This means that the characteristics as a viscous body, in which deformation is generated depending on applied force and is not restored to the original form even after removal of the applied force, is made higher.

The viscosity/elasticity ratio, tan δ, of raw material rice gel is preferably 0.3 or less, and particularly preferably 0.2 or less.

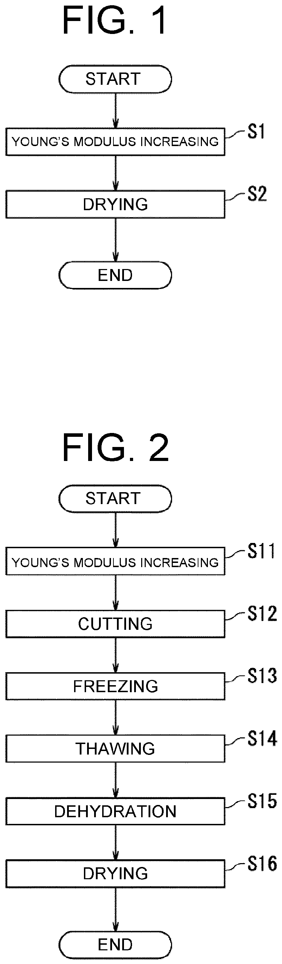

Then, referring to FIG. 1, description will be made for an example of the production method of dried rice gel according to the embodiment. FIG. 1 is a flow chart showing the production method of dried rice gel according to the embodiment. As shown in FIG. 1, the production method of dried rice gel includes process S1 and process S2.

In process S1, Young's modulus of raw material rice gel is increased to harden the raw material rice gel, thereby obtaining hardened rice gel. In other words, Young's modulus of the hardened rice gel increases relative to Young's modulus of the raw material rice gel. This facilitates removal of water from the hardened rice gel. Consequently, according to the embodiment, it is possible to dry hardened rice gel efficiently. This is demonstrated by Example 1 to Example 12 described later.

Preferably, in process S1, hardened rice gel is obtained by hardening raw material rice gel so as to cause Young's modulus of the raw material rice gel to exceeds a predetermined value (hereinafter, written as "predetermined value TH"). Young's modulus of the hardened rice gel is therefore a predetermined value TH or more. Consequently, according to the embodiment, removal of water from hardened rice gel is further facilitated, thus enabling more efficient drying. This is demonstrated by Example 6 to Example 11 described later.

Hereinafter, process S1 may referred to as "Young's modulus increasing process" or "hardening process". Hardened rice gel obtained by a Young's modulus increasing process is potentially β converted. In other words, starch of the hardened rice gel is potentially β converted.

Young's modulus increasing process

The term "hardening" in a Young's modulus increasing process means that Young's modulus of hardened rice gel becomes higher than Young's modulus of raw material rice gel. In other words, "hardening" in a Young's modulus increasing process means that hardened rice gel becomes harder relative to raw material rice gel. Preferably, "hardening" in a Young's modulus increasing process means that raw material rice gel is hardened so as to cause Young's modulus of the raw material rice gel to exceed a predetermined value TH.

A predetermined value TH of Young's modulus is e.g., a value of 5 kilopascal or more. A predetermined value TH of Young's modulus is preferably a value of 25 kilopascal or more, more preferably a value of 150 kilopascal or more, more preferably a value of 164 kilopascal or more, and more preferably a value of 300 kilopascal or more. Furthermore, a predetermined value TH of Young's modulus is more preferably a value of 400 kilopascal or more, more preferably a value of 444 kilopascal or more, more preferably a value of 500 kilopascal or more, more preferably a value of 600 kilopascal or more, and more preferably a value of 700 kilopascal or more. Thus, the greater a predetermined value TH of Young's modulus is, the more preferable it is. In other words, the greater Young's modulus of hardened rice gel derived by a Young's modulus increasing process is, the more facilitated removal of water from hardened rice gel is, thus enabling more efficient drying. This is demonstrated by Example 5 to Example 12 described later.

Here, the upper limit of a predetermined value TH of Young's modulus is not particularly limited, but may be e.g., 1000 kilopascal or 1500 kilopascal.

Hereinafter, a term and temperature for increasing Young's modulus of raw material rice gel and obtaining hardened rice gel in a Young's modulus increasing process may referred to as "hardening period" and "hardening temperature", respectively. In a Young's modulus increasing process, Young's modulus of raw material rice gel is increased to harden raw material rice gel at a hardening temperature for a hardening period, thereby obtaining hardened rice gel. Young's modulus of the hardened rice gel thus obtained is defined by the hardening period and the hardening temperature.

For example, in a Young's modulus increasing process, raw material rice gel is placed under a normal temperature environment, thereby increasing Young's modulus of the raw material rice gel to harden the raw material rice gel, and obtaining hardened rice gel. Preferably, for example, in a Young's modulus increasing process, raw material rice gel is placed under a normal temperature environment, thereby hardening the raw material rice gel so as to cause Young's modulus of the raw material rice gel to exceed a predetermined value TH, and obtaining hardened rice gel. Normal temperature refers to temperature in a condition with neither heating nor cooling from an outer system. Here, when hardened rice gel is obtained under a normal temperature environment, hardening temperature is normal temperature.

A period for placing raw material rice gel under a normal temperature environment, i.e., a hardening period of raw material rice gel under a normal temperature environment is not particularly limited, as long as Young's modulus of a part or the whole of raw material rice gel exceeds a predetermined value TH. In addition, the upper limit of a hardening period of raw material rice gel under a normal temperature environment is not particularly limited, but is e.g., 3 years.

In a Young's modulus increasing process, it is preferable to cool raw material rice gel, thereby accelerating increase in Young's modulus of raw material rice gel. That means that, in Young's modulus increasing process, it is preferable to cool raw material rice gel, thereby increasing Young's modulus of raw material rice gel to harden raw material rice gel, and obtaining hardened rice gel. In this preferable example, a period for obtaining hardened rice gel, i.e., a hardening period can be shortened. Consequently, it is possible to improve productivity of hardened rice gel. More preferably, in a Young's modulus increasing process, raw material rice gel is cooled, thereby hardening raw material rice gel so as to cause Young's modulus of raw material rice gel to excess a predetermined value TH, and obtaining hardened rice gel.

Cooling temperature in a Young's modulus increasing process is not particularly limited, but is e.g., lower than normal temperature, preferably -1°C or more to 18°C or less, and more preferably 0°C or more to 10°C or less. This is because increase in Young's modulus of raw material rice gel is potentially unlikely to occur when cooling temperature is e.g., below -1°C. This is also because bacteria and the like potentially propagate when cooling temperature is e.g., above 18°C. Here, when hardened rice gel is obtained under a cooling environment, hardening temperature is cooling temperature.

The lower limit of a hardening period of raw material rice gel by cooling, i.e., the lower limit of a cooling period in a Young's modulus increasing process is not particularly limited, but preferably 0.5 hours or more, and more preferably 20 hours or more. This is because Young's modulus is potentially likely to increase insufficiently when a cooling period is below 0.5 hours. In addition, the lower limit of a cooling period is more preferably 7 days or more, more preferably 15 days or more, more preferably 30 days or more, more preferably 60 days or more, more preferably 90 days or more, more preferably 200 days or more, more preferably 300 days or more, and more preferably 388 days or more. Meanwhile, the upper limit of a cooling period is not particularly limited, but is e.g., 3 years.

In a Young's modulus increasing process, any combination of cooling temperature and a cooling period may be employed as long as Young's modulus of a part or the whole of rice gel increases. However, in view of bacterial growth control, cost reduction, and the like, the process is preferably performed at -1°C or more to 18°C or less for 0.5 hours or more, and more preferably performed at 0°C or more to 10°C or less for 20 hours or more.

Referring back to FIG. 1, hardened rice gel is dried to obtain dried rice gel in process S2. Hereinafter, process S2 may be referred to as "drying process".

Drying Process

Drying herein means removal of water by vaporization.

Examples of means for performing drying in a drying process include heat treatment, blast (cold blast, hot blast) treatment, microwave irradiation, spray drying, freeze drying, and drum drying, and these can be used alone or in combination of two or more types. Among them, preferred is drying in low temperature such as cool blast drying.

Temperature in drying is not particularly limited, but is preferably 50°C or less, at which starch would not be gelatinized, and more preferably 30°C or less. In addition, humidity in drying is desirably a low value wherever possible. Particularly, it is preferably 50% or less, and more preferably 10% or less.

Drying should just be performed so as to provide a water content of rice gel of 20% or less, preferably 10% or less, and more preferably 5% or less.

Here, the production method of dried rice gel according to the embodiment may include, between a Young's modulus increasing process and a drying process, one or more processes that performs a treatment for hardened rice gel obtained in a Young's modulus increasing process. In this case, in the drying process, drying is performed for hardened rice gel that received a treatment in a process between the Young's modulus increasing process and the drying process. Accordingly, an object to be dried in a drying process may be hardened rice gel itself obtained in a Young's modulus increasing process, or hardened rice gel that received a treatment in a process between a Young's modulus increasing process and a drying process.

Next, referring to FIG. 2, description will be made for another example of the production method of dried rice gel according to the embodiment. FIG. 2 is a flow chart showing another example of the production method of dried rice gel according to the embodiment. As shown in FIG. 2, the production method of dried rice gel includes process S 11-process S16.

In process S11, Young's modulus of raw material rice gel is increased to harden the raw material rice gel, thereby obtaining hardened rice gel. Particularly, process S11 is the same as process S1 in FIG. 1, which is a Young's modulus increasing process.

In process S12, the hardened rice gel is cut. Hereinafter, process S12 may be referred to as "cutting process".

Cutting Process

In the production method of dried rice gel according to the embodiment, it is preferable to include a cutting process for cutting hardened rice gel, before a drying process for obtaining dried rice gel (process S16). Inclusion of a cutting process and enlargement of the surface area of hardened rice gel allow efficient removal of water of the hardened rice gel.

In a cutting process, hardened rice gel may be cut into any shapes as long as the surface area of hardened rice gel is enlarged. It may be cut into any shape such as a sheet shape, a thread shape, a flake shape, a particle shape, or a powder shape, as long as the surface area is enlarged. An apparatus to be used for cutting may also be selected freely, for example, cutting may be made into sheet shapes with a slicer or the like, or by grating with a grater or the like. Among them, grating is preferred.

Referring back to FIG. 2, hardened rice gel is frozen in process S13. In the example in FIG. 2, hardened rice gel after cutting is frozen. Hereinafter, process S13 may be referred to as "freezing process".

Freezing Process

In the production method of dried rice gel according to the embodiment, it is preferable to include a freezing process for freezing hardened rice gel, before a drying process for obtaining dried rice gel (process S16). Inclusion of a freezing process causes hardened rice gel to change into a sponge form, thus allowing efficient removal of water.

Examples of means for performing freezing in a freezing process include placement under a low-temperature atmosphere such as in a freezer, immersion into liquid hydrogen, and immersion in alcohol brine, and these may be used alone or in combination of two or more types. Among them, preferred is placement under a low-temperature atmosphere such as in a freezer.

Freezing temperature is not particularly limited, but is preferably -20°C or more to -1°C or less, and more preferably -10°C or more to -1°C or less. Additionally, for example, freezing temperature in a freezing process is preferably lower than hardening temperature in a Young's modulus increasing process.

Referring back to FIG. 2, hardened rice gel is thawed in process S14. In the example in FIG. 2, thawing is performed for post-cutting, post-freezing hardened rice gel. Hereinafter, process S14 may be referred to as "thawing process".

Thawing Process

In the production method of dried rice gel according to the embodiment, it is preferable to include a thawing process for thawing hardened rice gel, after a freezing process for freezing the hardened rice gel. Inclusion of a thawing process allows improving removal efficiency of water by a dehydration process described later. In a thawing process, hardened rice gel is thawed at thawing temperature higher than cooling temperature of a freezing process.

Referring back to FIG. 2, dehydration is performed for hardened rice gel in process S15. In the example in FIG. 2, dehydration is performed for post-cutting, post-freezing, post-thawing hardened rice gel. Hereinafter, process S15 may be referred to as "dehydration process".

Dehydration Process

In the production method of dried rice gel according to the embodiment, it is preferable to include a dehydration process for performing dehydration for hardened rice gel, before a drying process for obtaining dried rice gel.

Dehydration herein refers to applying a physical treatment, such as pressurization, to hardened rice gel, and means removing water remaining in a liquid state, from hardened rice gel. That is, dehydration refers to a concept different from "drying" described above.

Examples of means for dehydration include pressurization such as compression or application of load, and centrifugation, and these may be used alone or in combination of two or more types. Among them, pressurization is preferred.

Referring back to FIG. 2, hardened rice gel is dried to obtain dried rice gel in process S16. In the example in FIG. 2, post-cutting, post-freezing, post-thawing, post-dehydration hardened rice gel is thawed. In particular, process S16 is the same as process S2 in FIG. 1, which is a drying process.

Order of Each Process

In the production method of dried rice gel according to the embodiment, the cutting process, freezing process, thawing process, and dehydration process as described above may be included in any order before a drying process, provided that the thawing process is performed after the freezing process. The production method of dried rice gel may also include any one process, any two processes, or any three processes of a cutting process, a freezing process, a thawing process, and a dehydration process between a Young's modulus increasing process and a drying process, provided that the thawing process can be included in the production method of dried rice gel if the production method of dried rice gel includes the freezing process. In addition, an order of processes to be performed between a Young's modulus increasing process and a drying process is not particularly limited. The production method of dried rice gel may also include another process to perform a treatment for hardened rice gel between a Young's modulus increasing process and a drying process.

In the production method of dried rice gel according to the embodiment, it is preferable to include a dehydration process after a cutting process. This is because enlargement of the surface area of hardened rice gel by cutting allows efficiently removing water of hardened rice gel.

In the production method of dried rice gel according to the embodiment, it is preferable to include a dehydration process after a freezing process. This is because hardened rice gel that experiences a freezing process changes into a sponge form, and dehydration of the hardened rice gel thus changed into a sponge form provides removal of a large amount of water. Specifically, when a freezing process is included before a dehydration process, it is preferable to perform dehydration after thawing hardened rice gel thus frozen. This is because hardened rice gel that experienced a freezing process has changed to a spongy form, and thawing and dehydration of the hardened rice gel thus changed to a spongy form provides removal of a larger amount of water. In spite of depending on a freezing condition, when a dehydration process is included after a freezing process, the dehydration process removes water in amount of preferably 30 wt% or more of hardened rice gel, or 40 wt% of hardened rice gel.

In the production method of dried rice gel according to the embodiment, it is more preferable to include a dehydration process after a cutting process and a freezing process. This is because two effects, conversion to a spongy form by freezing and enlargement of the surface area by cutting, provide efficient removal of water. In this case, a freezing process and a cutting process should just be included in any order.

In the production method of dried rice gel according to the embodiment, it is more preferable to include a freezing process after a cutting process, and to further include a dehydration process after the freezing process. This is because cutting in advance leads to increase in the surface area of hardened rice gel, thus allowing freezing in a short time. Furthermore, if cutting is performed after a freezing process, hardened rice gel in a frozen state is so hard that cutting is very difficult; and as well, even if cutting is performed after thawing, a time for freezing must be provided, thus making production complicated. However, inclusion a freezing process after a cutting process allows avoidance of such problems.

Dried Rice Gel

As described with reference to FIG. 1 and FIG. 2 so far, the dried rice gel according to the embodiment is obtained by increasing Young's modulus of raw material rice gel, thereby obtaining hardened rice gel which is the raw material rice gel being hardened, and then drying the hardened rice gel. In this case, it is preferable to accelerate increase in Young's modulus of raw material rice gel by cooling raw material rice gel. Furthermore, it is preferable that hardened rice gel be cut before drying of the hardened rice gel. It is preferable that hardened rice gel be frozen before drying of the hardened rice gel. It is preferable that hardened rice gel be thawed after freezing of the hardened rice gel. It is preferable that hardened rice gel be dehydrated before drying of the hardened rice gel.

Adding water to the dried rice gel produced by the production method of dried rice gel according to the embodiment and then heating can provide rice gel with the same hardness and texture as raw material rice gel. In particular, adding water to the dried rice gel and then heating and stirring can provide rice gel with the same hardness and texture as an undried one. Here, hardness and texture of raw material rice gel is as described above.

The dried rice gel exhibits the same hardness and texture as raw material rice gel by addition of water and heating, and thus can be utilized for a variety of food with taking advantage of such hardness and texture. In other words, the dried rice gel allows intended improvement of mouthfeel and texture of processed food. An example of the processed food can be confectionery (rice cake sweets, manju, cake, ice cream, jelly, or the like), rice, bread, noodle, or the like.

The dried rice gel may be used after addition of water and heating to be reconstituted to the same condition as raw material rice gel in advance, or may be used with remaining in a dried form. In other words, the dried rice gel added with remaining in a dried form is reconstituted to the same condition as an undried one by water in processed food and heat in processing, thereby improving mouthfeel and texture of processed food. For example, in production of bread, the dried rice gel in a dried form is added in kneading of materials, then fermented and fired, thereby reconstituting the dried rice gel to the same condition as an undried one by water in bread dough and heat in firing, and improving mouthfeel and texture of bread.

Examples

The present invention will be specifically described with reference to the following examples, but the present invention is not limited to the following examples.

Drying Test

Example 1

As raw material rice gel, a material was prepared that was phase-transited to a gel form by mechanically stirring cooked rice derived by cooking white rice with an amylose content of 25% or more and water in a proportion of 1:2 by weight (product name: Rice gelée Hard, manufacturer: Rice Technology Kawachi Co., Ltd., hereinafter referred to as Rice gelée).

First, a treatment for increasing Young's modulus of Rice gelée thus prepared was performed (Young's modulus increasing process) to obtain hardened rice gel. In particular, Rice gelée was retained at 10°C (hardening temperature) for 48 hours (hardening period) or more to obtain hardened rice gel.

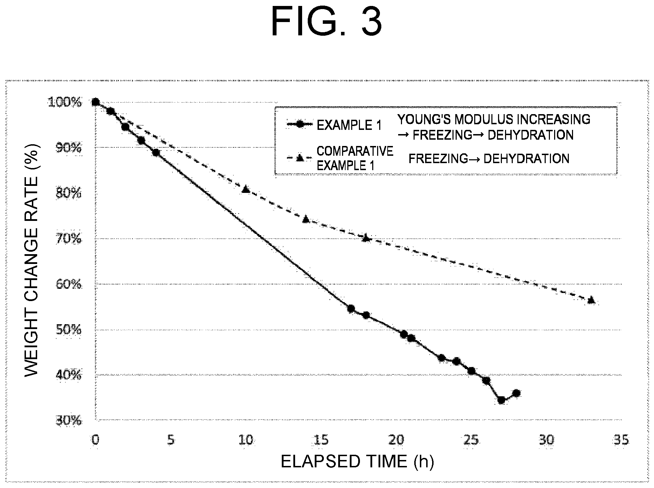

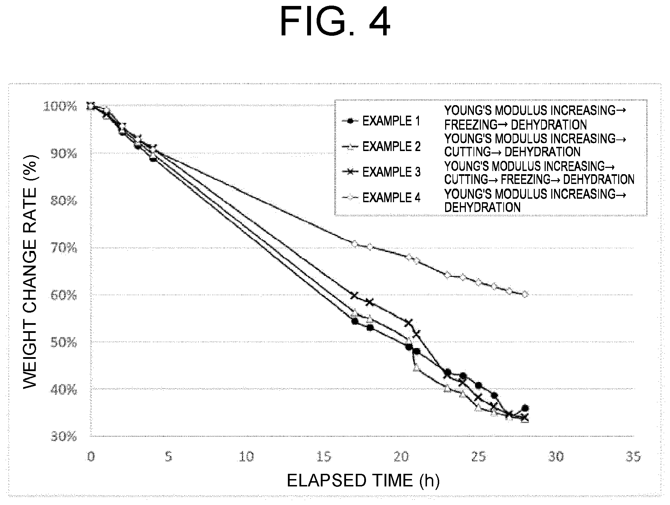

The hardened rice gel was retained and frozen at -18°C for 40 hours (freezing process). The hardened rice gel thus frozen was retained and thawed at 10°C for 6 hours (thawing process), and further dehydrated with application of a load of 50 g/cm$^2$ for 10 minutes (dehydration process). The dehydration removed water in an amount of 7.1 wt% of the hardened rice gel. The hardened rice gel thus dehydrated was weighed to about 250 g in a flat bat, and dried in a dehydrator set to a temperature of 60°C and a humidity of 0% (drying process). Elapsed time from the start of drying (drying time: hour) and weight change rate (%) of hardened rice gel according to Example 1 are shown in FIG. 3 and FIG. 4. Weight change rate of hardened rice gel is shown as ((weight of hardened rice gel at measurement after the start of drying)/(weight of hardened rice gel before the start of drying)) $\times$ 100. Less weight change rate of hardened rice gel indicates less weight of hardened rice gel caused by removal of water by drying. In short, weight change rate is to be an index indicating the degree of dryness of hardened rice gel. This represents that the lower weight change rate of hardened rice gel is, the drier it is. Accordingly, as shown in FIG. 3 and FIG. 4, less weight change rate of hardened rice gel suggested that drying removes water from hardened rice gel to lead to less weight of hardened rice gel.

Comparative Example 1

Drying test was performed in the same manner as Example 1 except for not performing a treatment for increasing Young's modulus of Rice gelée. In other words, Rice gelée was directly frozen, dehydrated, and then dried, without obtaining hardened rice gel. Elapsed time from the start of drying (drying time) and weight change rate of Rice gelée are shown in FIG. 3. Weight change rate of Rice gelée according to Comparative Example 1 is shown as ((weight of Rice gelée at measurement after the start of drying)/(weight of Rice gelée before the start of drying)) × 100. Less weight change rate of Rice gelée indicates less weight of Rice gelée caused by removal of water by drying. In short, weight change rate is to be an index indicating the degree of dryness of Rice gelée. This represents that the lower weight change rate of Rice gelée is, the drier it is. Accordingly, as shown in FIG. 3, less weight change rate of Rice gelée suggested that drying removes water from Rice gelée to lead to less weight of Rice gelée.

As shown in FIG. 3, referring to the same elapsed time (e.g., 25 hours) in Example 1 and Comparative Example 1, the weight change rate of hardened rice gel according to Example 1 was less than the weight change rate of Rice gelée according to Comparative Example 1. In other words, confirmation was provided that performing a Young's modulus increasing process in Example 1 enables efficient drying of rice gel.

Example 2

First, a treatment for increasing Young's modulus of Rice gelée was performed under the same condition as Example 1 to obtain hardened rice gel.

The hardened rice gel was cut by grating with a grater, and the cut material was weighed to about 250 g in a flat bat and dried under the same condition as Example 1. Drying time and weight change rate are shown in FIG. 4.

Example 3

First, a treatment for increasing Young's modulus of Rice gelée was performed under the same condition as Example 1 to obtain hardened rice gel.

The hardened rice gel was cut under the same condition as Example 2, and the cut material was frozen, thawed, and dehydrated under the same condition as Example 1. The dehydration removed water in an amount of 7.8 wt % of the hardened rice gel. The hardened rice gel thus dehydrated was weighed to about 250 g in a flat bat, and dried under the same condition as Example 1. Drying time and weight change rate are shown in FIG. 4.

Example 4

First, a treatment for increasing Young's modulus of Rice gelée was performed under the same condition as Example 1 to obtain hardened rice gel.

The hardened rice gel was dehydrated. The hardened rice gel thus dehydrated was weighed to about 250 g in a flat bat, and dried under the same condition as Example 1. Drying time and weight change rate are shown in FIG. 4.

As shown in FIG. 4, referring to the same elapsed time (e.g., 25 hours) in Example 1 to Example 4, the weight change rates of hardened rice gel according to Example 2 to Example 4 were less than the weight change rate of hardened rice gel according to Example 1. In other words, confirmation was provided that performing a freezing process and/or a cutting process in addition to a Young's modulus increasing process enables more efficient drying of rice gel.

Example 5

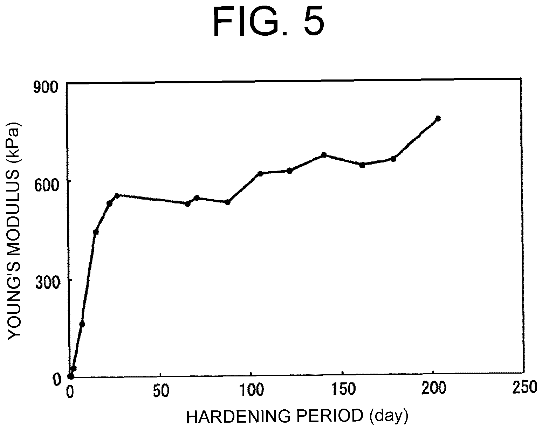

In Example 5, hardened rice gel was obtained by increasing Young's modulus of raw material rice gel with changing hardening period (cooling period, in particular). In particular, raw material rice gel was the same Rice gelée as the raw material rice gel according to Example 1. Then, a treatment for increasing Young's modulus of Rice gelée was performed by placing Rice gelée under an environment at 8°C just for each hardening period (Young's modulus increasing process). Furthermore, Young's modulus of the hardened rice gel thus obtained was measured for each hardening period of Rice gelée. For measurement of Young's modulus, a softness measurement system (Softmeasure (HGOP-ST1-XY), Horiuchi Electronics Co., Ltd.) was used. Measurement results of Young's modulus are shown in Table 1, Table 2, and FIG. 5. In FIG. 5, the abscissa axis represents a hardening period (day) of raw material rice gel, and the longitudinal axis represents Young's modulus (kilopascal: kPa).

As shown in Table 1, Table 2, and FIG. 5, the longer hardening period was, the larger Young's modulus of hardened rice gel was, in general. Here, Young's modulus at a hardening period of 0 (zero) day (3 kPa) was Young's modulus of Rice gelée in a condition without performing a treatment for increasing Young's modulus.

[Table 1]

| Hardening period (day) | 0 | 1 | 2 | 7 | 15 | 23 | 27 | 66 |
|---|---|---|---|---|---|---|---|---|
| Young's modulus (kPa) | 3 | 5 | 29 | 164 | 444 | 531 | 556 | 528 |

[Table 2]

| Hardening period (day) | 71 | 88 | 106 | 122 | 141 | 162 | 179 | 204 |
|---|---|---|---|---|---|---|---|---|
| Young's modulus (kPa) | 545 | 532 | 617 | 626 | 672 | 641 | 657 | 779 |

Example 6

The raw material rice gel according to Example 6 was the same Rice gelée as the raw material rice gel according to Example 1.

First, a treatment for increasing Young's modulus of Rice gelée prepared was performed to obtain hardened rice gel (Young's modulus increasing process). In particular, Rice gelée was retained at 6°C (hardening temperature) for a day (hardening period).

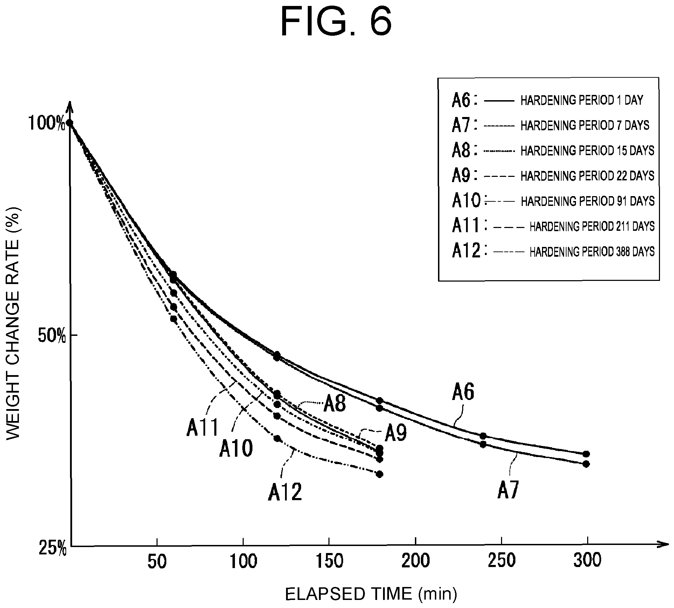

The hardened rice gel thus obtained was cut by grating with a grater. The hardened rice gel thus grated was retained and frozen at -18°C for 48 hours (freezing process). The hardened rice gel thus frozen was retained and thawed at 5°C for 12 hours (thawing process), and further dehydrated with application of a load of 50 g/cm$^2$ for 10 minutes (dehydration process). The hardened rice gel thus dehydrated was weighed to about 10 g in a flat bat, and dried in a dehydrator set to a temperature of 60°C and a humidity of 0% (drying process). As the dehydrator, an infrared moisture meter (model number or product name, Kett Electric Laboratory) was used. Elapsed time from the start of drying (drying time: minute) and weight change rate (%) of hardened rice gel are shown in FIG. 6. Definition of weight change rate of hardened rice gel is the same as the definition of weight change rate of hardened rice gel according to Example 1. Accordingly, this suggests that the less weight change rate of hardened rice gel is, the drier it is. In FIG. 6, curve A6 represents weight change rate of hardened rice gel according to Example 6. As shown by curve A6 in FIG. 6, less weight change rate of hardened rice gel in Example 6 suggested that drying removes water from hardened rice gel to lead to less weight of hardened rice gel.

Example 7 to Example 12

In Example 7 to Example 12, a treatment for increasing Young's modulus of Rice gelée, cutting, freezing, thawing, and dehydration were performed under the same condition as Example 6 except for having difference in a hardening period of Rice gelée. In these cases, hardening periods of Rice gelée in the treatment for increasing Young's modulus were 7 days for Example 7, 15 days for Example 8, 22 days for Example 9, 91 days for Example 10, 211 days for Example 11, and 388 days for Example 12. Elapsed time from the start of drying (drying time) and weight change rate of hardened rice gel are shown in FIG. 6. In FIG. 6, curve A7 represents weight change rate of the hardened rice gel according to Example 7; curve A8 represents weight change rate of the hardened rice gel according to Example 8; curve A9 represents weight change rate of the hardened rice gel according to Example 9; curve A10 represents weight change rate of the hardened rice gel according to Example 10; curve A11 represents weight change rate of the hardened rice gel according to Example 11, curve A12 represents weight change rate of the hardened rice gel according to Example 12.

As shown in FIG. 6, referring to the same elapsed time (e.g., 150 hours) in Example 6 to Example 12, the longer a hardening period of Rice gelée is, the less the weight change rate of the hardened rice gel was, in general. In other words, confirmation was provided that the longer a hardening period of Rice gelée was, the more efficiently rice gel can be dried. Meanwhile, as shown in FIG. 5, the longer a hardening period of Rice gelée was, the larger Young's modulus of the hardened rice gel was. Accordingly, Example 5 in FIG. 5 and Example 6 to Example 12 in FIG. 6 provided confirmation that the larger Young's modulus of hardened rice gel is, the larger weight change rate of hardened rice gel by drying is. In other words, confirmation was provided that the larger Young's modulus of hardened rice gel is, the more efficiently rice gel can be dried.

Specifically, as shown in FIG. 6, when a hardening period was extended from a day (Example 6: A6) to 15 days (Example 8: A8), weight change rate of hardened rice gel was significantly reduced at the same elapsed time (e.g., 150 minutes). In other words, confirmation was provided that when a hardening period is extended from a day to 15 days, rice gel can be dramatically efficiently dried. Meanwhile, as shown in Table 1 and FIG. 5, Young's modulus of hardened rice gel in a hardening period of a day was 5 kPa, and Young's modulus of hardened rice gel in a hardening period of 15 days was 444 kPa. Accordingly, confirmation was provided that in Example 8, Young's modulus of hardened rice gel was significantly larger compared with that of Example 6, and that 444 kPa or more provides dramatically efficient drying of rice gel.

Moreover, for example, as shown in FIG. 6, as shown in FIG. 6, when a hardening period was extended from a day (Example 6: A6) to 7 days (Example 7: A7), weight change rate of hardened rice gel was reduced at the same elapsed time (e.g., 150 minutes). In other words, confirmation was provided that when a hardening period is extended from a day to 7 days, rice gel can be more efficiently dried. Meanwhile, as shown in Table 1 and FIG. 5, Young's modulus of hardened rice gel in a hardening period of a day is 5 kPa, and Young's modulus of hardened rice gel in a hardening period of 7 days was 164 kPa. Accordingly, confirmation was provided that in Example 7, Young's modulus of hardened rice gel was significantly larger compared with that of Example 6, and that 164 kPa or more provides efficient drying of rice gel.

Embodiments and examples of the present invention have been described with reference to the drawings so far. However, the present invention is not limited to the embodiments and examples described above, and can be performed in various aspects in the range without departing from its spirit.

Evaluation Method for the Degree of α conversion

Evaluation of the degree of α conversion can be performed by Method 2 for glucoamylase.

A material dehydrated with ethanol and acetone and passed through a sieve (an aperture of 150 pm) is set as a sample.

A phosphate citrate buffer and an enzyme solution were added to the sample, and incubated to obtain a sample solution S. Meanwhile, a sodium hydroxide solution, the phosphate citrate buffer, and the enzyme solution were added to the sample and incubated to obtain a sample solution R. The amounts of grape sugar in the sample solution S and the sample solution R thus obtained are measured by a glucose oxidase method (Glucose CII Test Wako, manufactured by FUJIFILM Wako Pure Chemical Corporation).

Additionally, in preparation of the sample solution S and the sample solution R, a material with addition of an inactivated enzyme instead of the enzyme solution is set as each test solution blank, and the amount of grape sugar of each of the test solution blanks is also measured by the glucose oxidase method.

The degree of α conversion is measured in accordance with the following formula:

$$\text{degree of α conversion (\%)} = ((AS\text{-}BSB)/(AR\text{-}BRB)) \times 100$$

AS: absorbance of a sample solution S; AR: absorbance of a sample solution R
BSB: blank absorbance of a sample solution S; BRB: blank absorbance of a sample solution R

The application further discloses supplementary note as below. Here, the following supplementary note shall not limit the present invention.

Supplementary Note

A production method of dried rice gel according to an embodiment of the present invention includes a Young's modulus increasing process and a drying process. Moreover, in the production method of dried rice gel, it is preferred:

(1) that a freezing process for freezing hardened rice gel be included before the drying process,
(2) that a cutting process for cutting hardened rice gel be included before the drying process,
(3) that a dehydration process for removing water from hardened rice gel by a physical means be included before the drying process,
(4) that the Young's modulus increasing process be performed by retaining raw material rice gel at a temperature of -1°C or more to 18°C or less for 0.5 hours or more,
(5) that the raw material rice gel be formed of high-amylose rice having an amylose content of 20% or more, and
(6) that the raw material rice gel be rice gel obtained by subjecting gelatinized rice to mechanical stirring, the gelatinized rice being derived by adding more than 1.5 times as much water to the high-amylose rice and performing heating.

INDUSTRIAL APPLICABILITY

The present invention relates to a production method of dried rice gel and dried rice gel, and has industrial applicability.

**Claims**

1.  A production method of dried rice gel comprising:

    increasing Young's modulus of raw material rice gel to harden the raw material rice gel, and obtaining hardened rice gel, and
    drying the hardened rice gel and obtaining dried rice gel.

2.  The production method of dried rice gel according to claim 1, wherein in the obtaining the hardened rice gel, the hardened rice gel is obtained by hardening the raw material rice gel in such manner that the Young's modulus of the raw material rice gel is above a predetermined value.

3.  The production method of dried rice gel according to claim 2, wherein the predetermined value is a value of 160 kilopascal or more.

4.  The production method of dried rice gel according to claim 2, wherein the predetermined value is a value of 440 kilopascal or more.

5.  The production method of dried rice gel according to any one of claim 1 to claim 4, wherein in the obtaining the hardened rice gel, the raw material rice gel is cooled, thereby accelerating increase in Young's modulus of the raw material rice gel.

6.  The production method of dried rice gel according to any one of claim 1 to claim 5, wherein in the obtaining the hardened rice gel, the raw material rice gel is retained at a temperature of -1°C or more to 18°C or less for 0.5 hours or more.

7.  The production method of dried rice gel according to any one of claim 1 to claim 6, further comprising freezing the hardened rice gel before the obtaining the dried rice gel.

8.  The production method of dried rice gel according to claim 7, further comprising thawing the hardened rice gel after the freezing the hardened rice gel.

9.  The production method of dried rice gel according to any one of claim 1 to claim 8, further comprising cutting the hardened rice gel before the obtaining the dried rice gel.

10. The production method of dried rice gel according to any one of claim 1 to claim 9, further comprising performing dehydration for the hardened rice gel before the obtaining the dried rice gel.

11. The production method of dried rice gel according to any one of claim 1 to claim 10,
    wherein the raw material rice gel comprises high-amylose rice with an amylose content of 20% or more.

12. The production method of dried rice gel according to claim 11, wherein the raw material rice gel is rice gel obtained by subjecting gelatinized rice to mechanical stirring, the gelatinized rice being derived by adding water in an amount of more than 1.5 times the amount of high-amylose rice to the high-amylose rice and performing heating.

13. A dried rice gel provided by increasing Young's modulus of raw material rice gel, thereby obtaining hardened rice gel which is the raw material rice gel being hardened, and then drying the hardened rice gel.

14. The dried rice gel according to claim 13, wherein the hardened rice gel is frozen before drying of the hardened rice gel.

15. The dried rice gel according to claim 13 or claim 14, wherein the hardened rice gel is dehydrated before drying of the hardened rice gel.

# FIG. 1

```
        ( START )
            |
            v
+---------------------------+   S1
| YOUNG'S MODULUS INCREASING |
+---------------------------+
            |
            v
+---------------------------+   S2
|          DRYING           |
+---------------------------+
            |
            v
        (  END  )
```

# FIG. 2

```
        ( START )
            |
            v
+---------------------------+   S11
| YOUNG'S MODULUS INCREASING |
+---------------------------+
            |
            v
+---------------------------+   S12
|          CUTTING          |
+---------------------------+
            |
            v
+---------------------------+   S13
|          FREEZING         |
+---------------------------+
            |
            v
+---------------------------+   S14
|          THAWING          |
+---------------------------+
            |
            v
+---------------------------+   S15
|        DEHYDRATION        |
+---------------------------+
            |
            v
+---------------------------+   S16
|          DRYING           |
+---------------------------+
            |
            v
        (  END  )
```

# FIG. 3

# FIG. 4

# FIG. 5

# FIG. 6

**INTERNATIONAL SEARCH REPORT**

| International application No. |
| --- |
| PCT/JP2020/026571 |

A. CLASSIFICATION OF SUBJECT MATTER
A23L 7/10(2016.01)i
FI: A23L7/10 A

According to International Patent Classification (IPC) or to both national classification and IPC

B. FIELDS SEARCHED

Minimum documentation searched (classification system followed by classification symbols)
A23L7/10

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)
JSTPlus/JMEDPlus/JST7580 (JDreamIII)

C. DOCUMENTS CONSIDERED TO BE RELEVANT

| Category* | Citation of document, with indication, where appropriate, of the relevant passages | Relevant to claim No. |
| --- | --- | --- |
| X<br>Y | 高橋敦子，他，米ゲルの乾燥特性と吸水復元性評価，農業食料工学会誌，2017, vol. 79, pp. 131-139, abstract, page 132, left column, paragraph [0002], page 132, right column, paragraph [0002] to page 133, left column, paragraph [0001], (TAKAHASHI, Atsuko, et al., "Drying Characteristics and Restorability of Rice Gel", Journal of the Japanese Society of Agricultural Machinery and Food Engineers) | 1-6,9,13<br>7-15 |
| Y | JP 2013-126401 A (INA FOOD INDUSTRY CO., LTD.) 27.06.2013 (2013-06-27) claims, paragraph [0030] | 7-15 |
| Y | JP 3-164149 A (MATSUMOTO, Masayuki) 16.07.1991 (1991-07-16) claims, page 2, upper right column, lines 6-11 | 7-15 |

☒ Further documents are listed in the continuation of Box C.    ☒ See patent family annex.

| | |
| --- | --- |
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>   02 September 2020 (02.09.2020) | Date of mailing of the international search report<br>   15 September 2020 (15.09.2020) |
| --- | --- |
| Name and mailing address of the ISA/<br>   Japan Patent Office<br>   3-4-3, Kasumigaseki, Chiyoda-ku,<br>   Tokyo 100-8915, Japan | Authorized officer<br><br><br>Telephone No. |

Form PCT/ISA/210 (second sheet) (January 2015)

**INTERNATIONAL SEARCH REPORT**

International application No.

PCT/JP2020/026571

C (Continuation). DOCUMENTS CONSIDERED TO BE RELEVANT

| Category* | Citation of document, with indication, where appropriate, of the relevant passages | Relevant to claim No. |
|---|---|---|
| Y | JP 1-98460 A (FUSHIMI PHARMACEUTICAL CO., LTD.) 17.04.1989 (1989-04-17) page 3, upper right column, lines 1-7 | 7-15 |
| Y<br>A | JP 2013-70663 A (NATIONAL AGRICULTURE AND FOOD RESEARCH ORGANIZATION) 22.04.2013 11-12 (2013-04-22) claims, paragraphs [0010], [0023], examples | 11-12<br>1-10,13-15 |
| A | WO 2014/199961 A1 (NATIONAL AGRICULTURE AND FOOD RESEARCH ORGANIZATION) 18.12.2014 (2014-12-18) claims | 1-15 |
| A | JP 2015-65934 A (NATIONAL AGRICULTURE AND FOOD RESEARCH ORGANIZATION) 13.04.2015 (2015-04-13) claims, paragraph [0026] | 1-15 |
| A | WO 2018/088092 A1 (YANMAR CO., LTD.) 17.05.2018 (2018-05-17) claims | 1-15 |

Form PCT/ISA/210 (continuation of second sheet) (January 2015)

**INTERNATIONAL SEARCH REPORT**

Information on patent family members

International application No.

PCT/JP2020/026571

| Patent Documents referred in the Report | Publication Date | Patent Family | Publication Date |
|---|---|---|---|
| JP 2013-126401 A | 27 Jun. 2013 | (Family: none) | |
| JP 3-164149 A | 16 Jul. 1991 | (Family: none) | |
| JP 1-98460 A | 17 Apr. 1989 | (Family: none) | |
| JP 2013-70663 A | 22 Apr.2013 | (Family: none) | |
| WO 2014/199961 A1 | 18 Dec. 2014 | (Family: none) | |
| JP 2015-65934 A | 13 Apr. 2015 | (Family: none) | |
| WO 2018/088092 A1 | 17 May 2018 | US 2019/0269271 A1 claims EP 3539392 A1 CN 109890218 A | |

Form PCT/ISA/210 (patent family annex) (January 2015)

**EP 3 997 985 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013070663 A
- JP 5840904 B